# EUROPÄISCHE PATENTSCHRIFT

(11) **EP 2 394 044 B1**
(45) Veröffentlichungstag und Bekanntmachung des Hinweises auf die Patenterteilung: **11.01.2017**
(21) Anmeldenummer: 10701819.4
(22) Anmeldetag: 26.01.2010
(51) Int. Cl.: F02D 41/02, F02D 41/06, F01N 3/20

(54) **VERFAHREN ZUM BETREIBEN EINER BRENNKRAFTMASCHINE MIT EINER EINEN SCR-KATALYSATOR UMFASSENDEN ABGASREINIGUNGSANLAGE**
METHOD FOR THE OPERATION OF AN INTERNAL COMBUSTION ENGINE COMPRISING AN EMISSION CONTROL SYSTEM THAT INCLUDES AN SCR CATALYST
PROCÉDÉ POUR FAIRE FONCTIONNER UN MOTEUR À COMBUSTION INTERNE ÉQUIPÉ D'UN SYSTÈME DE DÉPOLLUTION DES GAZ D'ÉCHAPPEMENT À CATALYSEUR SCR

(30) Priorität: 06.02.2009 DE 102009007765
(43) Veröffentlichungstag der Anmeldung: 14.12.2011
(73) Patentinhaber: Daimler AG, 70327 Stuttgart (DE)
(72) Erfinder: KOCH, Thomas, 71034 Böblingen (DE); MASSNER, Alexander, 73730 Esslingen (DE); TRAEBERT, Anke, 70469 Stuttgart (DE)
(74) Vertreter: JENSEN & SON
(86) Internationale Anmeldenummer: PCT/EP2010/000430
(87) Internationale Veröffentlichungsnummer: WO 2010/089039

(56) Entgegenhaltungen:
- EP-A1- 2 009 268
- WO-A1-2004/061278
- DE-A1- 10 054 877
- DE-A1- 10 324 013
- DE-A1-102006 014 073

## Beschreibung

Die Erfindung betrifft ein Verfahren zum Betreiben einer Brennkraftmaschine mit einer einen SCR-Katalysator umfassenden Abgasreinigungsanlage nach dem Oberbegriff des Anspruchs 1.

Bei Brennkraftmaschinen mit einer einen SCR-Katalysator umfassenden Abgasreinigungsanlage besteht allgemein das Bedürfnis, dass der SCR-Katalysator möglichst rasch seine zur Stickoxidverminderung erforderliche Betriebstemperatur erreicht. Hierzu wird in der DE 197 49 400 A1 oder der WO 2004/061278 vorgeschlagen, einen Wirkungsgrad für den SCR-Katalysator zu bestimmen und für den Fall, dass dieser beispielsweise bei einem Warmlauf der Brennkraftmaschine einen vorbestimmten Wert unterschreitet, bestimmte Brennkraftmaschinenbetriebsgrößen so zu verändern, dass der Stickoxid-Gehalt im unbehandelten Abgas verringert und die Abgastemperatur und damit die Temperatur des SCR-Katalysators erhöht wird. Allerdings kann insbesondere in Verbindung mit einem Kaltstart bzw. Warmlauf der Brennkraftmaschine eine Aufheizung des SCR-Katalysators auch bei einem tolerierbaren Wert für die Gesamtemission von Stickoxiden (NOx) zu einer unerwünscht hohen Emission von besonders schädlichem Stickstoffdioxid (NO₂) führen.

Aufgabe der Erfindung ist es, ein Verfahren zum Betreiben einer Brennkraftmaschine mit einer einen SCR-Katalysator umfassenden Abgasreinigungsanlage anzugeben, bei welchem eine Abgabe von NO₂ an die Umgebung insbesondere in Verbindung mit einem Kaltstart bzw. einem Warmlauf der Brennkraftmaschine zuverlässig auf tolerierbar niedrige Werte begrenzt ist.

Diese Aufgabe wird mit einem Verfahren mit den Merkmalen des Anspruchs 1 gelöst.

Bei dem erfindungsgemäßen Verfahren zum Betreiben einer Brennkraftmaschine mit einer einen SCR-Katalysator umfassenden Abgasreinigungsanlage erfolgt eine Abschätzung einer Stickoxid-Speichermenge von im SCR-Katalysator gespeicherten Stickoxiden, und die Brennkraftmaschine wird mit einem Kaltstartmotorbetriebsverfahren mit vorgebbaren Werten für vorgebbare Brennkraftmaschinenbetriebsgrößen betrieben, wenn die Abschätzung ergibt, dass die Stickoxid-Speichermenge einen vorgebbaren Stickoxid-Speichermengengrenzwert überschreitet. Das für den Fall einer den Stickoxid-Speichermengengrenzwert überschreitenden Stickoxid-Speichermenge im SCR-Katalysator vorgesehene spezifische Kaltstartmotorbetriebsverfahren findet hingegen bevorzugt keine Anwendung oder allenfalls eine Anwendung in abgewandelter Form, wenn, bzw. solange der Stickoxid-Speichermengengrenzwert unterschritten ist. Dadurch kann ein Kraftstoffmehrverbrauch vermieden werden, der sich typischerweise bei dem vorgesehenen spezifischen Kaltstartmotorbetriebsverfahren einstellt, wenn dieses aus Sicht der besonders kritisch anzusehenden NO₂-Emission nicht erforderlich ist.

Die Erfinder haben erkannt, dass eine unerwünscht hohe Emission von NO₂ in erster Linie von einer zu großen Menge von im SCR-Katalysator eingespeicherten Stickoxiden (NOx) verursacht ist. Die eingespeicherten NOx können in physisorbierter oder chemisorbierter Form oder auch in chemisch gebundener Form, beispielsweise als salpetrige Säure vorliegen. Es wurde überraschend festgestellt, dass im SCR-Katalysator gespeichertes NOx bei einer Aufheizung des SCR-Katalysators überwiegend als NO₂ desorbiert, wohingegen der NO-Anteil des desorbierten NOx wesentlich geringer ist. Infolge der gegenüber NO erhöhten Schädlichkeit von NO₂ ist es deshalb besonders erwünscht, die NO₂-Emission zu begrenzen. Durch die erfindungsgemäß vorgenommene Abschätzung der Stickoxid-Speichermenge kann das Risiko einer unerwünscht starken NO₂-Desorption infolge einer Aufheizung des SCR-Katalysators in Verbindung mit einem Kaltstart bzw. einem Warmlauf der Brennkraftmaschine ebenfalls abgeschätzt werden. Übersteigt die Stickoxid-Speichermenge den kritischen Stickoxid-Speichermengengrenzwert, so wird das erfindungsgemäße Kaltstartmotorbetriebsverfahren aktiviert. Damit erfolgt eine Aufheizung des SCR-Katalysators einerseits so frühzeitig, dass die NO₂-Emission auf vorgebbare Werte begrenzt bleibt. Andererseits erlaubt das erfindungsgemäße Kaltstartmotorbetriebsverfahren eine Aufheizgeschwindigkeit des SCR-Katalysators gezielt so einzustellen, dass die NO₂-Emission auf vorgebbare Werte begrenzt bleibt.

In Ausgestaltung der Erfindung werden bei aktiviertem Kaltstartmotorbetriebsverfahren Werte von Brennkraftmaschinenbetriebsgrößen derart vorgegeben, dass der SCR-Katalysator durch von der Brennkraftmaschine abgegebene Abgase so aufgeheizt wird, dass ein vorgebbarer Desorptionsratenwert für eine sich infolge der Aufheizung des SCR-Katalysators ergebende Rate von vom SCR-Katalysator desorbierenden Stickstoffdioxid oder eine vorgebbare Maximalkonzentration von NO₂ in dem an die Umgebung abgegebenen Abgas unterschritten wird. Es wurde festgestellt, dass eine rasche Aufheizung eines mit eingespeicherten Stickoxiden beladenen SCR-Katalysators eine sehr rasch zunehmende Desorption von NO₂, d.h. eine hohe Desorptionsrate zur Folge haben kann. Dies ist insbesondere dann der Fall, wenn bei der Aufheizung ein Desorptions-Temperaturbereich von typischerweise +10 °C bis +60 °C erreicht bzw. durchschritten wird. Je nach Größe der Stickoxid-Speichermenge resultiert daraus eine mehr oder weniger hohe Maximalkonzentration von an die Umgebung abgegebenem NO₂ im Abgas. Es ist daher besonders bevorzugt, wenn in weiterer Ausgestaltung der Erfindung bei einer Aufheizung des SCR-Katalysators ein vorgebbarer Aufheizgradientenmaximalwert für einen Aufheizgradienten des SCR-Katalysators unterschritten wird. Durch in Abhängigkeit von Stickoxid-Speichermenge und/oder Temperatur des SCR-Katalysators eingestellte Werte von Brennkraftmaschinenbetriebsgrößen können der Aufheizgradient und damit der Desorptionsratenwert bzw. die NO₂-Maximalkonzentration gezielt beeinflusst und vorgegebene oder vorgebbare Grenzwerte zuverlässig unterschritten werden. Beispielsweise kann durch entsprechend eingestellte Werte von Brennkraftmaschinenbetriebsgrößen eine vergleichsweise langsame Aufheizung von weniger als ca. 10 °C je min, insbesondere in einem Temperaturintervall von -20 °C bis +40 °C, eine sanfte NO₂-Desorption erzielt werden, bei welcher kritische NO₂-Spitzenkonzentrationen vermieden werden. Die Einstellung eines niedrigen Aufheizgradienten ist insbesondere dann vorteilhaft, wenn der SCR-Katalysator eine Temperatur wenig unterhalb oder innerhalb des Desorptions-Temperaturbereichs aufweist. Besonders vorteilhaft ist es, ausgehend von tiefen Temperaturen, d.h. weniger als 0 °C, insbesondere weniger als -20 °C, in einem ersten Aufheizschritt zunächst einen hohen Aufheizgradienten von etwa 20 °C/min oder mehr einzustellen. Dadurch wird die Expositionsdauer des SCR-Katalysators in dem für eine NOx-Einspeicherung kritischen Temperaturregime verkürzt, die weitere NOx-Einspeicherung weitgehend vermieden und somit die Stickoxid-Speichermenge begrenzt. Hat der SCR-Katalysator eine Temperatur knapp unterhalb des Desorptions-Temperaturbereichs, d.h. eine etwa um 10 °C darunter liegende Temperatur erreicht, wird ein niedriger, unterhalb des Aufheizgradientenmaximalwerts liegender Aufheizgradient eingestellt. Dabei ist es vorteilhaft, den Aufheizgradienten temperaturabhängig, insbesondere mit steigender Temperatur abnehmend einzustellen.

In weiterer Ausgestaltung der Erfindung beruht die Abschätzung der Stickoxid-Speichermenge auf einer Betriebsdauer der Brennkraftmaschine mit einer ständig eine vorgebbare insbesondere erste Schwellentemperatur unterschreitenden Temperatur für den SCR-Katalysator. Als kritisch haben sich speziell längere Schwachlastbetriebszeiten bei niedrigen Temperaturen erwiesen. Wird beispielsweise unterhalb einer katalysatorspezifischen Schwellentemperatur von typischerweise ca. 30 °C die Brennkraftmaschine längere Zeit im Leerlauf betrieben, so reichern sich emittierte Stickoxide im SCR-Katalysator zunehmend an. Bei mehrfachen, aufeinander folgenden Kaltstart- und/oder Warmlaufvorgängen, bei denen der SCR-Katalysator ständig Temperaturen aufweist, bei denen eine Einspeicherung von NOx erfolgen kann, kumulieren sich die jeweils eingespeicherten NOx-Mengen. Bei einer nachfolgenden, insbesondere raschen Aufheizung infolge einer ansteigenden Brennkraftmaschinenlast kann es daher zu einer unerwünscht starken NO₂-Desorption kommen. Erfindungsgemäß wird dem dadurch begegnet, dass die Stickoxid-Speichermenge über die Betriebszeit mit NOx-Einspeicherung integrierend abgeschätzt wird. Damit kann bereits vor Erreichen einer kritischen integralen Stickoxid-Speichermenge das Kaltstartmotorbetriebsverfahren aktiviert und eine gezielte Aufheizung des SCR-Katalysators initiiert werden. Zur Abschätzung der Stickoxid-Speichermenge wird bevorzugt auf abgespeicherte Emissionskennfelder der Brennkraftmaschine und entsprechende Adsorptionskennlinien zurückgegriffen. Es kann auch eine online-Berechnung, basierend auf einem Adsorptions- und Desorptionsmodell für den SCR-Katalysator vorgesehen sein.

In weiterer Ausgestaltung der Erfindung wird als Stickoxid-Speichermengengrenzwert ein Bruchteil einer Stickoxid-Speicherkapazität des SCR-Katalysators vorgegeben. Die Stickoxid-Speicherkapazität als maximal vom SCR-Katalysator speicherbare Stickoxid-Menge ist typischerweise stark temperaturabhängig und außerdem von Art und/oder Alterungszustand des SCR-Katalysators abhängig. Sie wird zweckmäßig vorab empirisch ermittelt und in einem Steuergerät abgespeichert. Dabei kann neben einer Temperaturabhängigkeit eine Alterungsabhängigkeit berücksichtigt werden. Für einen vorzugsweise vorgesehenen SCR-Katalysator vom Eisen- oder Kupfer-Zeolithtyp liegt die Stickoxid-Speicherkapazität typischerweise im Bereich von 1 g bis 30 g je l Katalysatorvolumen bei niedrigen Temperaturen von 0 °C und weniger. Durch die erfindungsgemäß vorgesehene Orientierung des Stickoxid-Speichermengengrenzwerts an der solcherart bestimmten Stickoxid-Speicherkapazität wird eine unerwünscht hohe Beladung des SCR-Katalysators vermieden. Dabei ist es besonders vorteilhaft, wenn der Bruchteil der Stickoxid-Speicherkapazität des SCR-Katalysators temperaturabhängig, insbesondere abnehmend mit abnehmender Temperatur des SCR-Katalysators vorgegeben wird.

In weiterer Ausgestaltung der Erfindung wird nach Erreichen einer vorgebbaren insbesondere zweiten Schwellentemperatur für den SCR-Katalysator das Kaltstartmotorbetriebsverfahren deaktiviert. Die Erfinder haben erkannt, dass oberhalb einer typischerweise katalysatorspezifischen Schwellentemperatur eine Einspeicherung von Stickoxiden im SCR-Katalysator gering oder sogar vernachlässigbar ist, wobei gegebenenfalls eingespeicherte Stickoxide bereits unterhalb dieser Temperatur wenigstens annähernd vollständig desorbieren können. Wird das Kaltstartmotorbetriebsverfahren möglichst rasch nach Erreichen der Schwellentemperatur deaktiviert, so wird damit auch ein Kraftstoffmehrverbrauch vermieden oder zumindest begrenzt. Überschreitet die vom Benutzer angeforderte Motorlast einen vorgebbaren Mindestwert, bei welchem sichergestellt ist, dass eine weitere Erwärmung oder zumindest keine Abkühlung erfolgt, so wird bevorzugt unmittelbar nach Erreichen der Schwellentemperatur das Kaltstartmotorbetriebsverfahren deaktiviert. Im anderen Fall kann vorgesehen sein, dieses noch eine gewisse Zeit aktiviert zu lassen. Vorteilhaft ist es in diesem Zusammenhang insbesondere, den genauen Zeitpunkt des Deaktivierens in Abhängigkeit von der Motorlast zu applizieren. Selbstverständlich kann auch vorgesehen sein, eine NO₂-Desorption sensorisch zu erfassen und nach Überschreiten eines detektierten NO₂-Desorptionsmaximums das aktivierte Kaltstartmotorbetriebsverfahren durch Beenden einiger aller dabei ergriffener Maßnahmen zu deaktivieren.

In weiterer Ausgestaltung der Erfindung wird bei aktiviertem Kaltstartmotorbetriebsverfahren eine Mehrfacheinspritzung von Kraftstoff in einen oder mehrere Zylinderbrennräume der Brennkraftmaschine vorgenommen, welche innerhalb eines Arbeitsspiels des jeweiligen Zylinders eine erste Piloteinspritzung, eine auf die erste Piloteinspritzung folgende zweite Piloteinspritzung und eine auf die zweite Piloteinspritzung folgende Haupteinspritzung umfasst. Dabei kann vorgesehen sein die erste und/oder die zweite Piloteinspritzung in zwei kurz aufeinander folgende Einzeleinspritzungen aufzuteilen. Durch die vorgenommenen wenigstens zwei der Haupteinspritzung vorangehenden Piloteinspritzungen ist eine Entflammung des eingespritzten Kraftstoffs auch bei niedrigen Motortemperaturen unterhalb des Gefrierpunkts ermöglicht. Bevorzugt wird eine vergleichsweise geringe Kraftstoffmenge von etwa 20 % oder weniger in Bezug auf die Haupteinspritzmenge in der ersten bzw. in der zweiten Piloteinspritzung eingespritzt. Auf diese Weise ist eine Zündung auch bei sehr niedrigen Umgebungs- bzw. Motortemperaturen von minus 20 °C oder weniger ermöglicht. Aufgrund der geringen Piloteinspritzmenge ist eine verdampfungsbedingte Temperaturabsenkung zumindest verringert und eine Entflammung der homogenisierten Piloteinspritzmenge ist verbessert.

Es ist besonders bevorzugt, wenn in weiterer Ausgestaltung der Erfindung die erste Piloteinspritzung in einem Kurbelwellenwinkelbereich von größer als 20 Grad vor einem oberen Totpunkt im Kompressionstakt des jeweiligen Zylinders erfolgt. Typischerweise ist bei niedrigen Temperaturen von minus 20 °C oder weniger die Temperatur im Zylinder für eine konventionelle Diffusionsverbrennung zu niedrig. Bei der erfindungsgemäßen frühen Piloteinspritzung ist eine Homogenisierung des Gemisches ermöglicht, wodurch die Zündbarkeit verbessert wird. Mit entsprechendem Zündverzug nach der Einspritzung erfolgt ein Verbrennungsumsatz der ersten Piloteinspritzung, was zu einem Anstieg des Temperaturniveaus im Zylinder führt. Die mit der zweiten Piloteinspritzung eingebrachte Kraftstoffmenge kann daher rasch verdampfen und ebenfalls entflammen. Eine typischerweise mit der homogenen oder teilhomogenen Verbrennung einhergehende HC-Emission hat sich dabei als vorteilhaft in Bezug auf eine Verminderung der Stickoxid-Speichermenge und der NO₂-Desorptionsmenge erwiesen. Obschon die Zusammenhänge nicht vollkommen geklärt sind, wird davon ausgegangen, dass durch begleitend zu NOx im Abgas vorhandene HC durch Blockieren von Adsorptionsplätzen eine NOx-Einspeicherung vermindert ist. Andererseits scheint eine Reduktion von gasförmigem und/oder eingespeichertem NO₂ und/oder NO zu erfolgen, wodurch die NO₂-Desorptions-menge ebenfalls vermindert wird. Es kann daher vorgesehen sein, parallel zum aktiven Kaltstartmotorbetriebsverfahren und/oder mit beginnender NO₂-Desorption gezielt eine HC-Anreicherung des Abgases vorzunehmen. Dabei kann insbesondere eine Einstellung einer vorgebbaren HC-Zielkonzentration im Bereich von 80 ppm bis 3000 ppm, besonders bevorzugt im Bereich von 200 ppm bis 1000 ppm einzustellen. Hierzu wird bevorzugt die Einspitzmenge der ersten und/oder zweiten Piloteinspritzung entsprechend erhöht. Eine außermotorische Zugabe von HC ins Abgas, beispielsweise durch eine Kraftstoffzugabeeinheit kann hierfür natürlich ebenfalls vorgesehen sein.

In weiterer Ausgestaltung der Erfindung erfolgt die zweite Piloteinspritzung zu einem Zeitpunkt nach dem Beginn eines Wärme freisetzenden Umsatzes von durch die erste Piloteinspritzung eingespritztem Kraftstoff. Durch die erfindungsgemäße Wahl des Zeitpunkts für die zweite Piloteinspritzung wird der Brennverlauf für den Kraftstoff der zweiten Piloteinspritzung sowie der folgenden Haupteinspritzung verbessert.

Eine weitere Verbesserung des Brennverlaufs ist ermöglicht, wenn in weiterer Ausgestaltung der Erfindung die Haupteinspritzung zu einem Zeitpunkt nach dem Beginn eines Wärme freisetzenden Umsatzes von durch die zweite Piloteinspritzung eingespritztem Kraftstoff erfolgt. Damit ist eine sichere Zündung auch bei sehr niedrigen Temperaturen gewährleistet und es ist eine gezielte Aufheizung der Abgasreinigungsanlage ermöglicht. Typischerweise erfolgt die Haupteinspritzung erst nach dem oberen Totpunkt des Kompressionstakts, insbesondere erst nach etwa 10 Grad Kurbelwinkel nach dem oberen Totpunkt. Daraus resultiert eine späte Verbrennungslage bzw. eine späte Lage des Verbrennungsschwerpunkts. Dies ermöglicht eine sichere Zündung und eine gezielte und rasche Aufheizung der Abgasreinigungsanlage und damit des SCR-Katalysators. Zudem ist eine verbrennungsbedingte NO-Bildung vermindert.

In weiterer Ausgestaltung der Erfindung erfolgt die Durchführung des Kaltstartmotorbetriebsverfahrens in einem vorgebbaren Schwachlastbereich der Brennkraftmaschine und das Kaltstartmotorbetriebsverfahren wird bei einer Brennkraftmaschinenlast oberhalb des Schwachlastbereichs deaktiviert. Nach Deaktivierung des Kaltstartmotorbetriebsverfahrens wird bevorzugt ein Brennverfahren mit dominierender Diffusionsverbrennung eingestellt.

Vorteilhafte Ausführungsformen der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Dabei zeigen:
- Fig. 1: eine Brennkraftmaschine mit einer einen SCR-Katalysator umfassenden Abgasreinigungsanlage in einer schematischen Darstellung,
- Fig. 2: ein Diagramm mit schematischer Darstellung der Temperaturabhängigkeit einer NOx-Speicherkapazität eines typischen Zeolith-SCR-Katalysators,
- Fig. 3: ein Diagramm mit schematisch dargestellten NO₂-Desorptionskennlinien für einen mit unterschiedlichen NOx-Speichermengen beladenen Katalysator gemäß Fig. 2,
- Fig. 4: ein weiteres Diagramm mit schematisch dargestellten, mit unterschiedlichen Aufheizgradienten erzielten NO₂-Desorptionskennlinien für einen mit NOx beladenen Katalysator gemäß Fig. 2 und
- Fig. 5: ein Diagramm mit schematischer Darstellung einer Wärmefreisetzung in einem Zylinder des Dieselmotors und Ansteuerimpulse I_{Injek} des entsprechenden Kraftstoffinjektors in Abhängigkeit von Zeit.

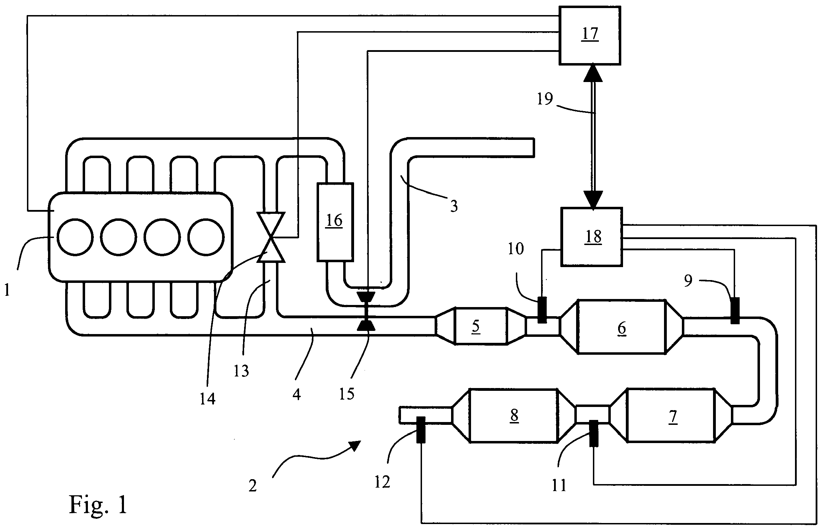

Fig. 1 zeigt schematisch eine vorteilhafte Ausführungsform eines Systems von Verbrennungsmotor 1 und Abgasreinigungsanlage 2 für ein nicht dargestelltes Kraftfahrzeug. Der Verbrennungsmotor 1 ist vorliegend als direkteinspritzende luftverdichtende Brennkraftmaschine nach dem Hubkolbenprinzip, nachfolgend vereinfacht als Dieselmotor bezeichnet, ausgeführt. Ein zugeordnetes nicht dargestelltes Kraftstoffeinspritzsystem ist vorzugsweise als so genanntes Common-Rail-System mit einstellbarem Raildruck bzw. Kraftstoffeinspritzdruck ausgeführt.

Den Zylindern des Dieselmotors 1 sind jeweils ein Brennraum mit ein oder zwei Einlass- und Auslassventilen, einer Glühkerze und einem Kraftstoffinjektor sowie ein oder mehrere Einlasskanäle für die Verbrennungsluft zugeordnet, was im Einzelnen nicht näher dargestellt ist. Die Kraftstoffinjektoren sind dabei zur Durchführung von Mehrfacheinspritzungen mit einstellbaren Einspritzmengen befähigt. Die Einlass- und Auslassventile sind bevorzugt mit einstellbaren Steuerzeiten und einstellbarem Öffnungshub betreibbar.

Der Dieselmotor 1 erhält seine Verbrennungsluft über eine Luftzufuhrleitung 3, in der ein nicht dargestellter Luftmassenmesser angeordnet ist. Mittels eines ebenfalls nicht dargestellten einstellbaren Drosselelements in der Luftzufuhrleitung kann der dem Dieselmotor 1 zugeführte Luftmassenstrom auf ein einstellbares Maß gedrosselt werden. Die Verbrennungsluft wird mittels eines Abgasturboladers 15 verdichtet und einem Ladeluftkühler 16 zur Kühlung zugeführt. Bevorzugt sind nicht näher dargestellte Mittel zur Anhebung des Temperaturniveaus der dem Dieselmotor 1 zugeführten Verbrennungsluft insbesondere in Verbindung mit einem Kaltstart bzw. Warmlauf vorgesehen. Vorzugsweise ist eine bedarfsweise Umgehbarkeit des Ladeluftkühlers 16 vorgesehen. Zur aktiven Anhebung der Verbrennungslufttemperatur kann eine Heizvorrichtung im Luftzufuhrtrakt vorgesehen sein. Besonders bevorzugt ist eine aktive Aufheizung mittels eines so genannten Gridheaters, der vorzugsweise in einer Abgasrückführleitung 13 vor deren Einmündung in die Luftzufuhrleitung 3 angeordnet ist. Der Abgasturbolader 15 ist vorzugsweise als so genannter VTG-Lader oder als Wastegate-Lader mit einstellbarem Ladedruck ausgeführt.

In den Brennräumen der Zylinder des Dieselmotors 1 erzeugtes Abgas wird über eine Abgasleitung 4 abgeleitet. Dabei kann der Verbrennungsluft über die Abgasrückführleitung 13 Abgas beigemischt und somit zum Dieselmotor 1 zurückgeführt werden. Der Anteil des rückgeführten Abgases (AGR-Rate) kann über ein AGR-Ventil 14 eingestellt werden. Vorzugsweise wird das zum Dieselmotor 1 rückführte Abgas mittels eines nicht dargestellten AGR-Kühlers gekühlt, wobei für den AGR-Kühler eine gegebenenfalls einstellbare Umgehung vorgesehen sein kann. Dadurch kann der Verbrennungsluft wahlweise gekühltes oder heißes bzw. erwärmtes Abgas zugemischt werden. Nicht rückgeführtes Abgas wird über den Abgasturbolader 15 der Abgasreinigungsanlage 2 zugeführt. Weiterhin ist bevorzugt ein nicht dargestelltes einstellbares Drosselelement in der Abgasleitung 4 stromab des Abgasturboladers 15 vorgesehen.

Mit der beschriebenen bevorzugten Ausführungsform können bedarfsgerecht unterschiedliche Werte für die wesentlichen Motorbetriebsparameter wie z.B. Luftmassenstrom, Einspritzzeit, -menge, -Druck und -Zeitpunkt mehrerer Kraftstoffeinspritzungen, AGR-Rate, Ladeluftdruck, Zylinderfüllung und damit unterschiedliche Brennverfahren dargestellt werden. Eine weitere Vergrößerung der Variabilität kann in Form eines einstellbaren Verdichtungsverhältnisses vorgesehen sein.

Eine bevorzugte Ausführungsform der dem Dieselmotor 1 zugeordneten Abgasreinigungsanlage 2 umfasst in Strömungsrichtung des Abgases gesehen in dieser Reihenfolge einen ersten Oxidationskatalysator 5, einen zweiten Oxidationskatalysator 6, einen Partikelfilter 7 und einen SCR-Katalysator 8. Als Partikelfilter 7 kommt vorzugsweise ein so genannter Wallflow-Filter auf SiC-, Cordiererit- oder Aluminiumtitanatbasis zum Einsatz. Der Partikelfilter 7 kann jedoch auch als Sintermetallfilter oder als Filtereinheit mit einer offenen Filterstruktur ausgebildet sein. Bevorzugt sind die Katalysatoren 5, 6, 8 als Wabenkörpermonolithen ausgeführt, die von katalytisch beschichteten Kanälen durchzogen sind, durch welche das zugeführte Abgas strömen kann. Der SCR-Katalysator 8 ist vorzugsweise als beschichteter Trägerkatalysator mit einer Kupfer- oder Eisenhaltigen Zeolithbeschichtung ausgeführt. Infolge dieser Ausführungsform besitzt der SCR-Katalysator 8 die Eigenschaft, Abgaskomponenten, insbesondere HC, NOx und NH₃ einspeichern zu können. Die wesentliche Eigenschaft besteht jedoch darin, unter oxidierenden Bedingungen eine selektive Reduktion von NOx zu N₂ mittels eingespeichertem bzw. zugeführtem NH₃ als Reaktionspartner katalysieren zu können. Eine Zufuhr von NH₃ erfolgt bevorzugt über eine nicht dargestellte Dosiereinrichtung, über welche eine Harnstoff enthaltende Lösung ins Abgas stromauf des SCR-Katalysators 8 eingespritzt werden kann. Ins Abgas eingespritzter Harnstoff zersetzt sich dabei unter Freisetzung von NH₃.

Eingangsseitig des ersten Oxidationskatalysators 5 und/oder des zweiten Oxidationskatalysators 6 kann eine Brennstoffzugabeeinheit vorgesehen sein, über welche beispielsweise Kraftstoff als Brennstoff dem Abgas zugeführt werden kann. Dies ermöglicht eine Anreicherung des Abgases mit Kraftstoff bzw. HC. Infolge exothermer Oxidation von dem Abgas bedarfsgerecht zugeführtem Brennstoff ist wiederum eine gezielte Aufheizung des Abgases, beispielsweise im Zusammenhang mit einer aktiven Regeneration des Partikelfilters 7 durch thermischen Rußabbrand ermöglicht.

In der Abgasnachbehandlungseinrichtung 2 sind verschiedene Temperatur- und Abgassensoren zur Erfassung von Abgas- und Bauteiletemperaturen sowie von Konzentrationen wichtiger Abgasbestandteile vorgesehen. Beispielhaft sind in Fig. 1 eingangsseitig des zweiten Oxidationskatalysators 6 sowie ausgangsseitig des Partikelfilters 7 je ein Temperatursensor 10, 11 in der Abgasreinigungsanlage 2 angeordnet. Ausgangsseitig des zweiten Oxidationskatalysators 6 sowie des SCR-Katalysators 8 sind gegenüber NOx und/oder NH₃ empfindliche Gassensoren 9, 12 vorgesehen. Zur Ermittlung der Beladung des Partikelfilters 7 mit Ruß und/oder Asche ist es zudem bevorzugt, ein- und ausgangsseitig des Partikelfilters 7 Drucksensoren bzw. einen Differenzdrucksensor vorzusehen, was in Fig. 1 nicht gesondert dargestellt ist. Mittels dieser und gegebenenfalls weiterer Sensoren kann der Betriebszustand der Abgasreinigungsanlage 2 umfassend ermittelt und der Betrieb des Dieselmotors 1 gegebenenfalls angepasst werden.

Zur Einstellung bzw. Erfassung des Motorbetriebs ist ein elektronisches Motorsteuergerät 17 vorgesehen. Das Motorsteuergerät 17 erhält einerseits Informationen über maßgebliche Motorbetriebsgrößen wie z.B. Drehzahl, Motorlast, Temperaturen, Drücke von den entsprechenden Sensoren bzw. Fühlern und kann andererseits Steuersignale als Einstellgrößen an Aktuatoren wie z.B. an das AGR-Ventil 14, den Abgasturbolader 15 oder das Drosselelement in der Luftzufuhrleitung 3 ausgeben. Es ist eine Regulierbarkeit von Betriebs- bzw. Zustandsgrößen der Gaszufuhrseite und der Kraftstoffzufuhrseite vorgesehen. Insbesondere ist das Motorsteuergerät 17 in der Lage, die Kraftstoffinjektoren zur Durchführung von Mehrfacheinspritzungen anzusteuern und gegebenenfalls den Kraftstoffeinspritzdruck bedarfsgerecht einzustellen. Ferner ist das Motorsteuergerät 17 zur Durchführung von Regel- und Steuervorgängen eingerichtet, mit welchen Motorbetriebsgrößen geregelt oder gesteuert eingestellt werden. Hierfür kann das Motorsteuergerät 17 auf abgespeicherte Kennfelder oder Berechnungs- bzw. Regel- oder Steuerroutinen zurückgreifen. Hierfür vorgesehene Subsysteme, wie Rechner, Speicher oder Ein-Ausgabeeinheiten und dergleichen sind nicht gesondert dargestellt.

In analoger Weise ist zur Erfassung und Einstellung von Betriebs- und Zustandsgrößen der Abgasnachbehandlungseinrichtung 2 ein zweites Steuergerät 18 vorgesehen. Das Motorsteuergerät 17 und das zweite Steuergerät 18 sind mittels einer bidirektionalen Datenleitung 19 miteinander verbunden. Auf diese Weise ist ein wechselseitiger Austausch von einem jeweiligen Steuergerät zur Verfügung stehenden Daten ermöglicht. Es versteht sich, dass die Steuergeräte 17, 18 auch in einer einzigen integralen Messwerterfassungs- und Steuereinheit zusammengefasst sein können.

In der dargestellten bevorzugten Ausführungsform ist weitestgehend ein optimaler Betrieb des Dieselmotors 1 und eine umfassende Reinigung der von ihm abgegebenen Abgase ermöglicht. Eine Abgasreinigung im gewünschten Umfang ist jedoch nur dann ermöglicht, wenn die Abgaskatalysatoren 5, 6, 8 ihre Betriebstemperatur aufweisen. Unterhalb einer so genannten Anspringtemperatur ist eine verminderte oder fehlende katalytische Aktivität gegeben, weshalb insbesondere in Verbindung mit einem Kaltstart bzw. einem Warmlauf besondere Maßnahmen erforderlich sind, um eine unerwünschten Schadstoffabgabe an die Umgebung zu vermeiden oder zumindest zu verringern. Nachfolgend wird speziell auf eine Verringerung der Emission von Stickstoffdioxid (NO₂) bei Temperaturen unterhalb einer Anspringtemperatur des SCR-Katalysators 8 eingegangen. Insbesondere betreffen die nachfolgend erörterten Maßnahmen eine Verringerung der NO₂-Emission bei Umgebungstemperaturen unterhalb oder nahe des Gefrierpunkts bzw. bei Temperaturen des SCR-Katalysators 8 unterhalb einer für eine Adsorption von NOx bzw. Desorption von NO₂ spezifischen Schwellentemperatur, welche für die bevorzugt eingesetzten Ausführungsformen im Bereich von typischerweise 10 °C bis 50 °C liegt.

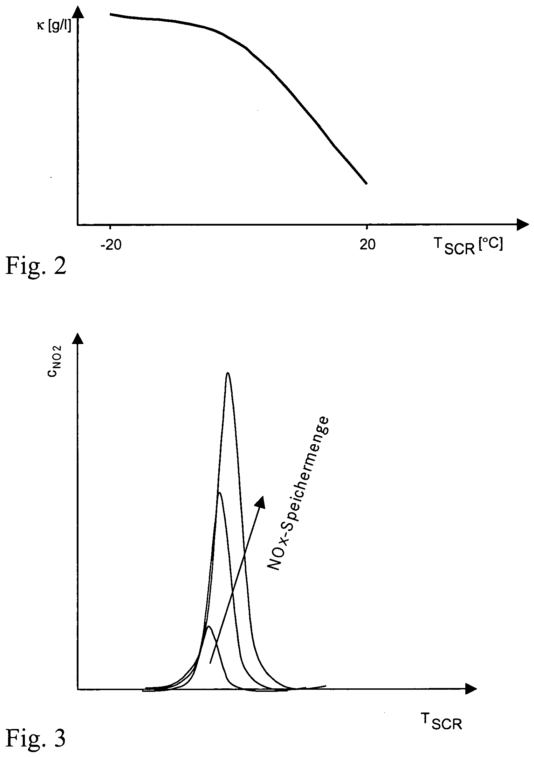

Bevor im Einzelnen auf bevorzugte Maßnahmen zur Vermeidung einer unerwünschten NO₂-Emission eingegangen wird, werden zunächst unter Bezug auf die Figuren 2 bis 4 die zugrunde liegenden Phänomene erläutert.

Im Diagramm von Fig. 2 ist schematisch die Temperaturabhängigkeit einer NOx-Speicherkapazität κ eines typischen SCR-Katalysators auf Zeolith-Basis dargestellt, Wie ersichtlich, nimmt mit abnehmender Temperatur T_{SCR} die NOx-Speicherkapazität κ, d.h. die Menge an NOx, welche im SCR-Katalysator eingespeichert werden kann, zu. Dabei ist mit abnehmenden Temperaturen ein zunehmendes Sättigungsverhalten festzustellen. Obschon je nach Art und Umfang der katalytischen Zeolith-Beschichtung die Temperaturabhängigkeit der NOx-Speicherkapazität κ unterschiedlich ausgeprägt sein kann, sind Werte im Bereich von 0,5 bis 30 Gramm NO₂ je Liter Katalysatorvolumen, insbesondere von 1 bis 20 g/l für die NOx-Speicherkapazität κ im Temperaturbereich von +20 bis minus 20 °C als typisch anzusehen. Insbesondere sind Maximalwerte von ca. 20 g/l bei Temperaturen von T_{SCR} < -15 °C charakteristisch für gebräuchliche Katalysatorausführungen. Oberhalb einer katalysatorspezifischen Schwellentemperatur von ca. +10 bis +50 °C, insbesondere von ca. +30 °C ist die NOx-Speicherkapazität κ typischerweise vernachlässigbar.

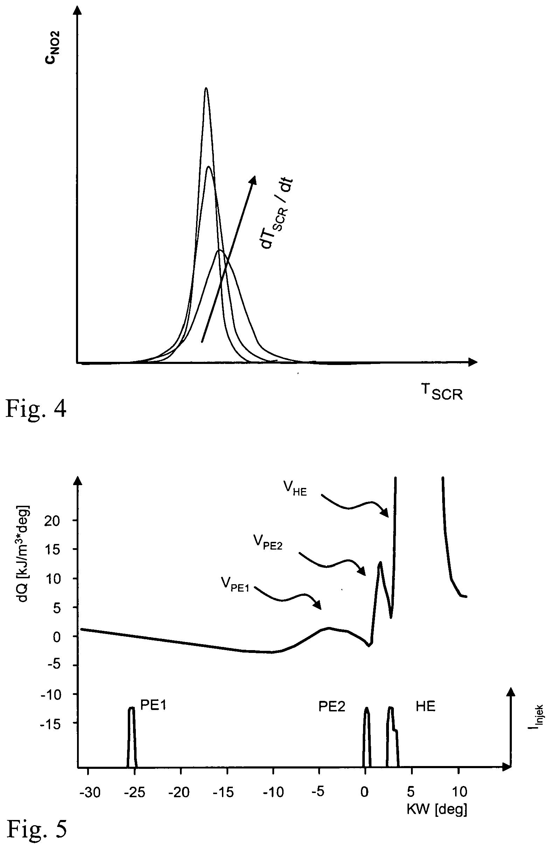

Die von den Erfindern nachgewiesene NOx-Speicherkapazität κ hat zur Folge, dass bei einem Motorbetrieb, bei welchem der SCR-Katalysator 8 die Schwellentemperatur unterschreitet, im Abgas vorhandene Stickoxide in mehr oder weniger starkem Umfang eingespeichert werden. Entsprechende Motorbetriebszustände umfassen beispielsweise einen oder mehrere aufeinanderfolgende Kaltstartvorgänge, an welche sich jeweils Schwachlastphasen oder Warmlaufphasen anschließen können. Wird im Anschluss an derartige Motorbetriebszustände vom Dieselmotor 1 eine höhere Last angefordert, so tritt infolge des stärker erhitzten Abgases eine Erwärmung des SCR-Katalysators 8 ein, was zu einer unerwünschten Desorption von zuvor eingespeicherten Stickoxiden führen kann, noch bevor der SCR-Katalysator 8 seine Anspringtemperatur erreicht. Dabei werden Stickoxide überwiegend als NO₂ desorbiert und an die Umgebung abgegeben. Die Erfinder haben festgestellt, dass das Ausmaß der NO₂-Desorption maßgeblich von der im SCR-Katalysator 8 eingespeicherten Stickoxidmenge sowie von der Aufheizgeschwindigkeit des SCR-Katalysators 8 abhängig ist, was anhand der Figuren 3 und 4 nachfolgend erläutert wird.

Im Diagramm von Fig. 3 sind schematisch NO₂-Desorptionskennlinien für einen mit unterschiedlichen NOx-Speichermengen beladenen SCR-Katalysator gemäß Fig. 2 dargestellt. Dabei sind Verläufe von ausgangsseitig des SCR-Katalysators im Abgas gemessenen NO₂-Konzentrationen C_{NO2} in Abhängigkeit von der Temperatur T_{SCR} des SCR-Katalysators aufgetragen. Bei den entsprechenden Versuchen wurde der SCR-Katalysator bei Temperaturen unterhalb der für eine NOx-Adsorption maßgeblichen Schwellentemperatur mit unterschiedlichen NOx-Mengen beladen und anschließend mit annähernd konstanter Aufheizheizrate aufgeheizt. Wie dargestellt, treten in einem charakteristischen Desorptions-Temperaturbereich NO₂-Desorptionsspitzen auf, die mit zunehmender NOx-Speichermenge eine zunehmende Höhe aufweisen. Obschon der Desorptions-Temperaturbereich von der Art der katalytischen Zeolith-Beschichtung abhängig ist, sind Werte im Bereich von +10 °C bis +60 °C, insbesondere von +20 °C bis + 50 °C für das Auftreten des NO₂-Konzentrationsmaximums als typisch anzusehen.

Es wurde weiter festgestellt, dass die NO₂-Desorptionsrate bzw. die Höhe und Breite der NO₂-Desorptionsspitze von der Aufheizgeschwindigkeit, d.h. von der Größe des Aufheizgradienten abhängig ist, wie anhand von Fig. 4 gezeigt werden kann. Im Diagramm von Fig. 4 sind analog zum Diagramm von Fig. 3 schematisch NO₂-Desorptionskennlinien für einen mit jeweils gleichen NOx-Speichermengen beladenen SCR-Katalysator gemäß Fig. 2 dargestellt. Dabei erfolgte eine Aufheizung nach Beladung des SCR-Katalysators mit annähernd konstanten, jedoch unterschiedlichen Aufheizheizraten dT_{SCR}/dt. Analog zu den im Diagramm von Fig.3 dargestellten Kurvenverläufen treten in einem charakteristischen Desorptions-Temperaturbereich NO₂-Desorptionsspitzen auf, die mit zunehmendem Aufheizgradienten dT_{SCR}/dt eine zunehmende Höhe und eine abnehmende Breite aufweisen.

Aufgrund der in den Diagrammen der Figuren 2 bis 4 dargestellten Ergebnisse von entsprechenden Grundlagenversuchen wurden Strategien zur Vermeidung einer unerwünscht starken NO₂-Freisetzung bei einem Kaltstart und/oder einem Warmlauf des Dieselmotors entwickelt, die erfindungsgemäß einerseits darauf abzielen, eine Einspeicherung von NOx im SCR-Katalysator 8 mengenmäßig zu begrenzen. Dies wird dadurch erreicht, dass eine Abschätzung der Menge von im SCR-Katalysator 8 gespeicherten NOx erfolgt und eine gezielte Aufheizung des SCR-Katalysators 8 mittels entsprechend erwärmten Abgas vorgenommen wird, wenn die Abschätzung ergibt, dass die NOx-Speichermenge einen vorgebbaren NOx-Speichermengengrenzwert überschreitet. Auf diese Weise wird eine Einspeicherung kritisch großer NOx-Mengen vermieden und es wird eine Desorption von im SCR-Katalysator 8 gespeicherten NOx zu einem Zeitpunkt erzwungen, bevor die NOx-Speichermenge ein derart kritisches Niveau erreicht, dass eine später erfolgende Erwärmung unerwünscht hohe NO₂-Desorptionsspitzen nach sich ziehen würde. Andererseits werden nachfolgend näher erläuterte Aufheizmaßnahmen derart vorgenommen, dass ein vorgebbarer Desorptionsratenwert für eine sich infolge der Aufheizung des SCR-Katalysators 8 ergebende Rate von vom SCR-Katalysator 8 desorbierenden NO₂ oder eine vorgebbare Maximalkonzentration von NO₂ in dem an die Umgebung abgegebenen Abgas unterschritten wird.

Zur Abschätzung der NOx-Speichermenge im SCR-Katalysator 8 ist es erfindungsgemäß vorgesehen, die Anzahl von aufeinander folgenden Kaltstart- und Warmlaufvorgängen zu erfassen, bei denen eine vorgebbare Schwellentemperatur für den SCR-Katalysator 8 ständig oder zumindest überwiegend unterschritten ist. Die dabei vom Dieselmotor 1 emittierte und im SCR-Katalysator 8 eingespeicherte NOx-Menge wird ebenfalls ermittelt. Hierfür wird bevorzugt auf abgespeicherte Emissionskennfelder des Dieselmotors 1 zurückgegriffen, in welchen Werte für die NOx-Rohemission in Abhängigkeit von maßgeblichen Motorbetriebsparametern abgespeichert sind. In Verbindung mit ebenfalls abgespeicherten Adsorptions- und Desorptionskennlinien entsprechend den in den Figuren 2 bis 4 dargestellten Diagrammen ist eine Aufsummierung von in jeweiligen Kaltstart- und Warmlaufvorgängen im SCR-Katalysator 8 eingespeicherten NOx-Mengen ermöglicht. Ergibt die Abschätzung, dass die NOx-Speichermenge einen NOx-Speichermengengrenzwert überschreitet, der einen insbesondere in Abhängigkeit von der Temperatur des SCR-Katalysators 8 und/oder des Abgasdurchsatzes vorgebbaren Bruchteil einer NOx-Speicherkapazität κ des SCR-Katalysators 8 überschreitet, so werden Aufheizmaßnahmen aktiviert, die bevorzugt so gesteuert sind, dass ein vorgebbarer Aufheizgradientenmaximalwert für einen Aufheizgradienten des SCR-Katalysators 8 insbesondere in oder nahe unterhalb des Desorptions-Temperaturbereichs unterschritten wird. Der Aufheizgradientenmaximalwert wird bevorzugt in Abhängigkeit von NOx-Speichermenge und/oder Temperatur des SCR-Katalysators 8 so festgelegt, dass die NO₂-Maximalkonzentration in dem an die Umgebung abgegebenen Abgas einen vorgebbaren Wert unterschreitet. Bevorzugt entspricht dieser Wert für die NO₂-Maximalkonzentration einer Sichtbarkeitsgrenze von NO₂. Typische Werte für den NOx-Speichermengengrenzwert betragen etwa 10 % bis 30 % der NOx-Speicherkapazität κ des SCR-Katalysators 8. Typische Werte für den Aufheizgradientenmaximalwert betragen etwa 5 bis 20 °C je min.

Erfindungsgemäß werden zur gezielten Aufheizung des SCR-Katalysators 8 bei einem Kaltstart und/oder einem sich daran anschließenden Warmlauf bzw. Kaltlauf mehrere normalerweise eingestellte Motorbetriebsgrößen derart verändert, dass ein gegenüber dem normalen Betrieb stärker erhitztes Abgas resultiert. Bevorzugt werden in einem nachfolgend als Kaltstartmotorbetriebsverfahren bezeichneten Verfahren eine oder mehrere der folgenden Maßnahmen ergriffen:
- Schließen des in der Abgasleitung 4 angeordneten Drosselelements entsprechend einer Verringerung des freien Durchflussquerschnitts um 10 % bis 95 %, insbesondere lastabhängig, mit stärkerer Drosselung bei geringer Last. Besonders bevorzugt ist ein Schließen des Drosselelements derart, dass ein Staudruck von 1 bar bis 4 bar, insbesondere von 2 bar bis 3 bar resultiert.
- Schließen des in der Luftzufuhrleitung 3 angeordneten Drosselelements entsprechend einer Verringerung des freien Durchflussquerschnitts um 10 % bis 95 %, vorzugsweise 30 % bis 70 %.
- Reduzierung des vom Abgasturbolader gelieferten Ladedrucks, gegebenenfalls bis zum Erreichen der Laufgrenze oder einer vorgebbaren Rußgrenze, vorzugsweise entsprechend einer Schwärzungszahl von 1 oder mehr.
- Betätigung des Gridheaters in der AGR-Leitung.
- Verändern der Steuerzeit der Auslassventile eines oder mehrerer Zylinder des Dieselmotors 1 derart, dass das Auslassventil im Bereich 10 °KWnOT bis 75 °KWnOT, bevorzugt 40 °KWnOT bis 65 °KwnOT öffnet.
- Schließen des AGR-Ventils 14, bevorzugt wenigstens zeitweise vollständig, bei Bedarf vorübergehend oder allmählich öffnend bis zu einem für den Normabetrieb applizierten Öffnungsgrad.
- Durchführung einer ersten Piloteinspritzung, einer auf die erste Piloteinspritzung folgenden zweiten Piloteinspritzung und einer auf die zweite Piloteinspritzung folgenden Haupteinspritzung von Kraftstoff in die Zylinder des Dieselmotors derart, dass eine Schwerpunktslage der Kraftstoffverbrennung nach dem oberen Totpunkt des Kompressionstakts resultiert.

Insbesondere bei niedrigen Außentemperaturen von -10 °C oder weniger ist es besonders bevorzugt, wenn für einen Kaltstart und eine sich daran anschließende Warmlauf- bzw. Kaltlaufphase entsprechend dem zuletzt genannte Punkt eine spezielle Einstellung von Kraftstoffeinspritzparametern erfolgt, wie nachfolgend unter Bezug auf das in Fig. 5 dargestellte Diagramm näher erläutert wird.

Im Diagramm von Fig. 5 sind im oberen Teil eine Wärmefreisetzung dQ in einem Zylinder des Dieselmotors 1 und im unteren Teil Ansteuerimpulse I_{Injek} des entsprechenden Kraftstoffinjektors in Abhängigkeit von Zeit, umnormiert auf Grad Kurbelwinkel KW, schematisch dargestellt.

Das erfindungsgemäße Kaltstartmotorbetriebsverfahren mit entsprechend gewählten Einspritzparametern ist als teilhomogenes Brennverfahren mit wenigstens zwei Piloteinspritzungen PE1, PE2 und wenigstens einer Haupteinspritzung HE von Kraftstoff in die Brennräume des Dieselmotors ausgelegt. Dabei erfolgt bevorzugt die erste Piloteinspritzung PE1 derart zu einem frühen Zeitpunkt im Kompressionstakt, dass sich im weiteren Verlauf des Kompressionstakts ein überwiegend homogenes zündfähiges Luft-Kraftstoffgemisch und nach einer gewissen Zündverzögerung ein homogene Verbrennung des homogenen Gemisches mit einer Wärmefreisetzung, gekennzeichnet durch den mit V_{PE1} bezeichneten Pfeil ergibt.

Die zweite Piloteinspritzung PE2 erfolgt bevorzugt etwa am oberen Totpunkt des Kompressionstakts zu einem Zeitpunkt, bei welchem infolge der Verbrennung der zuvor eingespritzten Kraftstoffmenge der ersten Piloteinspritzung PE1 eine deutliche Temperaturanhebung im Brennraum eingetreten ist. Die Haupteinspritzung HE erfolgt abgesetzt zur zweiten Piloteinspritzung PE2 analog einem Zeitpunkt, bei welchem infolge der Verbrennung der zuvor eingespritzten zweiten Piloteinspritzung PE2 eine weitere deutliche Wärmefreisetzung, gekennzeichnet durch den mit V_{PE2} bezeichneten Pfeil im Brennraum eingetreten ist. Auf diese Weise ist eine Entflammung des eingespritzten Kraftstoffs auch bei sehr niedrigen Temperaturen von -20 °C und weniger sichergestellt.

Die Verbrennung der Haupteinspritzung HE erfolgt bevorzugt in konventioneller Diffusionsverbrennung. Dabei kann es vorgesehen sein, die Haupteinspritzung HE in mehrere Teileinspritzungen derart aufzuteilen, dass eine gestaffelte Verbrennung resultiert. Dabei ist es besonders bevorzugt, wenn die Einspritzmenge jeder Teileinspritzung der Haupteinspritzung HE größer als die Einspritzmenge der vorangegangenen Teileinspritzung eingestellt wird.

Die erste Piloteinspritzung PE1 erfolgt bevorzugt in einem Kurbelwinkelbereich von 20 °KWvOT bis 40 °KWvOT. Die Einspritzmenge der ersten Piloteinspritzung PE 1 wird dabei bevorzugt etwa im Bereich von 5 % bis 25 % der Einspritzmenge der Haupteinspritzung HE gewählt. Die zweite Piloteinspritzung PE2 erfolgt bevorzugt im Bereich des oberen Totpunkts in einem Kurbelwinkelbereich von 5 °KWvOT bis 5 °KWnOT, jedoch frühestens nach Zündung des mit der ersten Piloteinspritzung PE1 eingespritzten Kraftstoffs. Die Einspritzmenge der zweiten Piloteinspritzung PE2 wird dabei bevorzugt etwa im Bereich von 2 % bis 15 % der Einspritzmenge der Haupteinspritzung HE gewählt.

Abweichend von der im Diagramm von Fig. 5 gezeigten Darstellung wird der Spritzbeginn der Haupteinspritzung HE typischerweise in einem Kurbelwinkelbereich von 5 °KWnOT bis 20 °KWnOT gewählt, so dass sich eine vergleichsweise späte Verbrennungslage ergibt. Dabei kann mit dem Zeitpunkt des Ansteuerbeginns für den Kraftstoffinjektor die Abgasaufheizung gezielt eingestellt werden, so dass die angestrebte Aufheizrate des SCR-Katalysators 8 zuverlässig erzielt werden kann. Bei einer gegebenenfalls vorgenommenen Aufteilung der Haupteinspritzung HE in zwei Teileinspritzungen erfolgt die zweite Teileinspritzung angelagert an die erste Teileinspritzung in einem Kurbelwinkelbereich von 25 °KWnOT bis 60 °KWnOT. Dadurch ergibt sich mit ca. 20 °KWnOT eine vergleichsweise späte Lage des Verbrennungsschwerpunkts, wodurch eine gezielte Aufheizung der Abgasreinigungsanlage 2 und des SCR-Katalysators 8 ermöglicht ist. Mit steigender Motorlast ist bevorzugt eine weitere Spätverschiebung des Verbrennungsschwerpunkts vorgesehen.

Mit dem erfindungsgemäßen Kaltstartmotorbetriebsverfahren ist eine gezielte Aufheizung der Abgasreinigungsanlage 2 und des SCR-Katalysators 8 auch bei sehr niedrigen Temperaturen und bei niedrigen Motorlasten ermöglicht. Eine Aufheizung zur Vermeidung unerwünscht hoher NO₂-Desorptionsspitzen ist damit auch unabhängig von der Einstellung bestimmter Fahrzustände ermöglicht. Erfindungsgemäß ist es vorgesehen, bei Erreichen einer vorgebbaren Schwellentemperatur für den SCR-Katalysator 8 das Kaltstartmotorbetriebsverfahren zu deaktivieren. Unter einer Deaktivierung ist dabei das Beenden wenigstens eines Teils der oben genannten Maßnahmen zu verstehen. Damit ist eine Begrenzung eines durch das Kaltstartmotorbetriebsverfahren verursachten Kraftstoffmehrverbrauchs ermöglicht. Eine Deaktivierung des Kaltstartmotorbetriebsverfahrens ist auch dann vorgesehen, wenn die Motorlast einen vorgegebenen oder vorgebbaren Grenzwert von etwa 30 % der Nennlast überschreitet. In diesem Fall erfolgt meist ohnehin eine natürlich Erwärmung der Abgasreinigungsanlage 2 und des SCR-Katalysators 8.

## Patentansprüche

1. Verfahren zum Betreiben einer Brennkraftmaschine mit einer Abgasreinigungsanlage umfassend einen SCR-Katalysator mit einer katalytischen Zeolithbeschichtung, welche unter oxidierenden Bedingungen eine selektive Reduktion von Stickoxiden mittels Ammoniak katalysieren kann, bei welchem in Verbindung mit einem Kaltstart und/oder einem Warmlauf der Brennkraftmaschine (1) die Brennkraftmaschine (1) mit einem Kaltstartmotorbetriebsverfahren zur Aufheizung des SCR-Katalysators (8) mit vorgebbaren Werten für vorgebbare Brennkraftmaschinenbetriebsgrößen betrieben wird,
**dadurch gekennzeichnet, dass**
eine Abschätzung einer Stickoxid-Speichermenge von in der katalytischen Zeolithbeschichtung des SCR-Katalysators (8) gespeicherten Stickoxiden erfolgt und das Kaltstartmotorbetriebsverfahren aktiviert wird, wenn die Abschätzung ergibt, dass die Stickoxid-Speichermenge einen vorgebbaren Stickoxid-Speichermengengrenzwert überschreitet.

2. Verfahren nach Anspruch 1,
**dadurch gekennzeichnet, dass**
bei aktiviertem Kaltstartmotorbetriebsverfahren Werte von Brennkraftmaschinenbetriebsgrößen derart vorgegeben werden, dass der SCR-Katalysator (8) durch von der Brennkraftmaschine (1) abgegebene Abgase so aufgeheizt wird, dass ein vorgebbarer Desorptionsratenwert für eine sich infolge der Aufheizung des SCR-Katalysators (8) ergebende Rate von aus der katalytischen Zeolithbeschichtung des SCR-Katalysators (8) desorbierendem Stickstoffdioxid oder eine vorgebbare Maximalkonzentration von Stickstoffdioxid in dem an die Umgebung abgegebenen Abgas unterschritten wird.

3. Verfahren nach Anspruch 2,
**dadurch gekennzeichnet, dass**
die Maximalkonzentration so gewählt ist, dass eine Stickstoffdioxid-Sichtbarkeitsgrenze unterschritten wird.

4. Verfahren nach einem der Ansprüche 1 bis 3,
**dadurch gekennzeichnet, dass**
bei der Aufheizung des SCR-Katalysators (8) ein vorgebbarer Aufheizgradientenmaximalwert für einen Aufheizgradienten des SCR-Katalysators (8) unterschritten wird.

5. Verfahren nach einem der Ansprüche 1 bis 4,
**dadurch gekennzeichnet, dass**
bei einer Aufheizung ausgehend von Temperaturen unterhalb Null Grad Celsius innerhalb eines Desorptionstemperaturbereichs, bei welchem eine Desorption von Stickstoffdioxid aus der katalytischen Zeolithbeschichtung des SCR-Katalysators (8) erfolgt, ein vorgebbarer Aufheizgradientenmaximalwert unterschritten wird.

6. Verfahren nach Anspruch 5,
**dadurch gekennzeichnet, dass**
innerhalb eines Desorptionstemperaturbereichs von 10 °C bis 60 °C ein Aufheizgradientenmaximalwert von 20 °C je Minute unterschritten wird.

7. Verfahren nach einem der Ansprüche 1 bis 6,
**dadurch gekennzeichnet, dass**
die Abschätzung der Stickoxid-Speichermenge auf einer Betriebsdauer der Brennkraftmaschine (1) mit einer ständig eine vorgebbare insbesondere erste Schwellentemperatur unterschreitenden Temperatur für den SCR-Katalysator (8) beruht.

8. Verfahren nach einem der Ansprüche 1 bis 7,
**dadurch gekennzeichnet, dass**
als Stickoxid-Speichermengengrenzwert ein Wert von 30 % oder weniger einer Stickoxid-Speicherkapazität (κ) der katalytischen Zeolithbeschichtung des SCR-Katalysators (8) vorgegeben wird.

9. Verfahren nach einem der Ansprüche 1 bis 8,
**dadurch gekennzeichnet, dass**
nach Erreichen einer vorgebbaren insbesondere zweiten Schwellentemperatur für den SCR-Katalysator (8) das Kaltstartmotorbetriebsverfahren deaktiviert wird.

10. Verfahren nach einem der Ansprüche 1 bis 9,
**dadurch gekennzeichnet, dass**
bei Durchführung des Kaltstartmotorbetriebsverfahrens eine Mehrfacheinspritzung von Kraftstoff in einen oder mehrere Zylinderbrennräume der Brennkraftmaschine (1) vorgenommen wird, welche innerhalb eines Arbeitsspiels des jeweiligen Zylinders eine erste Piloteinspritzung (PE1), eine auf die erste Piloteinspritzung folgende zweite Piloteinspritzung (PE2) und eine auf die zweite Piloteinspritzung (PE2) folgende Haupteinspritzung (HE) umfasst, wobei
- die erste Piloteinspritzung (PE1) in einem Kurbelwellenwinkelbereich von größer als 20 Grad vor einem oberen Totpunkt im Kompressionstakt des jeweiligen Zylinders erfolgt
- die zweite Piloteinspritzung (PE2) zu einem Zeitpunkt nach dem Beginn eines Wärme freisetzenden Umsatzes von durch die erste Piloteinspritzung (PE1) eingespritztem Kraftstoff erfolgt, und
- die Haupteinspritzung (HE) zu einem Zeitpunkt nach dem Beginn eines Wärme freisetzenden Umsatzes von durch die zweite Piloteinspritzung (PE2) eingespritztem Kraftstoff erfolgt.

11. Verfahren nach Anspruch 10,
**dadurch gekennzeichnet, dass**
die Einspritzmenge der zweiten Piloteinspritzung (PE2) kleiner gewählt wird als die Einspritzmenge der ersten Piloteinspritzung (PE1).

12. Verfahren nach Anspruch 10 oder 11,
**dadurch gekennzeichnet, dass**
die zweite Piloteinspritzung (PE2) in einem Kurbelwinkelbereich von 5 Grad vor bis 5 Grad nach dem oberen Totpunkt des Kompressionstakts erfolgt.

13. Verfahren nach einem der Ansprüche 10 bis 12,
**dadurch gekennzeichnet, dass**
die Haupteinspritzung (HE) in einem Kurbelwinkelbereich von 5 Grad bis 20 Grad nach dem oberen Totpunkt des Kompressionstakts erfolgt.

14. Verfahren nach einem der Ansprüche 1 bis 13,
**dadurch gekennzeichnet, dass**
die Durchführung des Kaltstartmotorbetriebsverfahrens in einem vorgebbaren Schwachlastbereich der Brennkraftmaschine (1) erfolgt und das Kaltstartmotorbetriebsverfahren bei einer Brennkraftmaschinenlast oberhalb des Schwachlastbereichs deaktiviert wird.

15. Verfahren nach einem der Ansprüche 1 bis 14,
**dadurch gekennzeichnet, dass**
die Abschätzung der Stickoxid-Speichermenge bei einem SCR-Katalysator (8) vorgenommen wird, der stromab eines Partikelfilters in der Abgasreinigungsanlage angeordnet ist.

## Claims

1. Method for the operation of an internal combustion engine with an emission control system comprising an SCR converter with a catalytic zeolite coating which can catalyse a selective reduction of nitrogen oxides by means of ammonia under oxidising conditions, in which method the internal combustion engine (1) is, in conjunction with a cold start and/or a warm-up of the internal combustion engine (1), operated using a cold start engine operating method for heating the SCR converter (8) with presettable values for presettable internal combustion engine operating variables,
**characterised in that**
a nitrogen oxide storage quantity of nitrogen oxides stored in the catalytic zeolite coating of the SCR converter (8) is estimated and the cold start engine operating method is activated if the estimate indicates that the nitrogen oxide storage quantity exceeds a presettable nitrogen oxide storage quantity limit value.

2. Method according to claim 1,
**characterised in that**
if the cold start engine operating method is activated, values of internal combustion engine operating variables are preset in such a way that the SCR converter (8) is heated by exhaust gases emitted by the internal combustion engine (1) in such a way that a presettable desorption rate value for a rate of nitrogen dioxide desorbing from the catalytic zeolite coating of the SCR converter (8) as a result of the heating of the SCR converter (8) or a presettable maximum concentration of nitrogen dioxide in the exhaust gas emitted into the environment is undershot.

3. Method according to claim 2,
**characterised in that**
the maximum concentration is chosen such that a nitrogen dioxide visibility limit is undershot.

4. Method according to any of claims 1 to 3,
**characterised in that**
in the heating process of the SCR converter (8), a presettable heating gradient maximum value for a heating gradient of the SCR converter (8) is undershot.

5. Method according to any of claims 1 to 4,
**characterised in that**
in the heating process starting from a temperature below zero degrees Celsius, a presettable heating gradient maximum value is undershot within a desorption temperature range in which nitrogen dioxide is desorbed from the catalytic zeolite coating of the SCR converter (8).

6. Method according to claim 5,
**characterised in that**
within a desorption temperature range of 10°C to 60°C, a heating gradient maximum value of 20°C per minute is undershot.

7. Method according to any of claims 1 to 6,
**characterised in that**
the estimation of the nitrogen oxide storage quantity is based on an operating time of the internal combustion engine (1) with a temperature for the SCR converter (8) which constantly undershoots a presettable, in particular first, threshold temperature.

8. Method according to any of claims 1 to 7,
**characterised in that**
a value of 30% or less of a nitrogen oxide storage capacity (κ) of catalytic zeolite coating of the SCR converter (8) is preset as nitrogen oxide storage quantity limit value.

9. Method according to any of claims 1 to 8,
**characterised in that**
the cold start engine operating method is deactivated on reaching a presettable, in particular second, threshold temperature for the SCR converter (8).

10. Method according to any of claims 1 to 9,
**characterised in that**
in the cold start engine operating method, a multiple injection of fuel into one or more cylinder combustion chambers of the internal combustion engine (1) is carried out, the multiple injection comprising within an operating cycle of the respective cylinder a first pilot injection (PE1), a second pilot injection (PE2) following the first pilot injection and a main injection (HE) following the second pilot injection (PE2), wherein
- the first pilot injection (PE1) is carried out in a crankshaft angle range of more than 20 degrees before a top dead centre in the compression stroke of the respective cylinder,
- the second pilot injection (PE2) is carried out at a time after the start of a heat-releasing conversion of fuel injected in the first pilot injection (PE1), and
- the main injection (HE) is carried out at a time after the start of a heat-releasing conversion of fuel injected in the second pilot injection (PE2).

11. Method according to claim 10,
**characterised in that**
the injected quantity of the second pilot injection (PE2) is chosen to be smaller than the injected quantity of the first pilot injection (PE1).

12. Method according to claim 10 or 11,
**characterised in that**
the second pilot injection (PE2) is carried out in a crank angle range of 5 degrees before to 5 degrees after the top dead centre of the compression stroke.

13. Method according to any of claims 10 to 12,
**characterised in that**
the main injection (HE) is carried out in a crank angle range of 5 degrees to 20 degrees after the top dead centre of the compression stroke.

14. Method according to any of claims 10 to 13,
**characterised in that**
the cold start engine operating method is carried out in a presettable low-load range of the internal combustion engine (1) and is deactivated at an internal combustion engine load above the low-load range.

15. Method according to any of claims 10 to 14,
**characterised in that**
the nitrogen oxide storage quantity is estimated at an SCR converter (8) which is located downstream of a particulate filter in the emission control system.

## Revendications

1. Procédé de fonctionnement d'un moteur à combustion interne équipé d'une installation de purification de gaz d'échappement comprenant un réducteur catalytique sélectif doté d'un revêtement zéolitique catalyseur qui dans des conditions d'oxydation peut catalyser une réduction sélective d'oxydes d'azote à l'aide d'ammoniac, selon lequel en liaison avec un démarrage à froid et/ou un réchauffage du moteur à combustion interne (1), le moteur à combustion interne (1) fonctionne selon un procédé de fonctionnement de moteur de démarrage à froid destiné à réchauffer le catalyseur réducteur catalytique sélectif (8) selon des valeurs prédéfinies pour des dimensions de fonctionnement de moteur à combustion interne prédéfinies, **caractérisé en ce qu'**une évaluation d'une quantité stockée d'oxyde d'azote s'effectue à partir des oxydes d'azote stockés dans le revêtement zéolitique du réducteur catalytique sélectif (8) et le processus de fonctionnement de démarrage à froid est activé lorsque l'évaluation indique que la quantité d'oxydes d'azote stockée dépasse une valeur limite de quantité stockée d'oxyde d'azote prédéfinie.

2. Procédé selon la revendication 1, **caractérisé en ce que** selon le procédé de fonctionnement de moteur à démarrage à froid, on prédéfinit les dimensions de fonctionnement de moteur à combustion interne de telle sorte que le réducteur catalytique sélectif (8) soit réchauffé par les gaz d'échappement émis par le moteur à combustion interne (1) de sorte qu'une vitesse de désorption prédéfinie pour une vitesse résultant du réchauffage du réducteur catalytique sélectif (8) par le dioxyde d'azote à désorber à partir du revêtement zéolitique du réducteur catalytique sélectif (8) ou pour une concentration maximum prédéfinie de dioxyde d'azote dans le gaz d'échappement émis dans l'environnement ne soit pas atteinte.

3. Procédé selon la revendication 2, **caractérisé en ce que** la concentration maximum est sélectionnée de telle sorte qu'une limite de sécurité pour le dioxyde d'azote ne soit pas atteinte.

4. Procédé selon l'une quelconque des revendications 1 à 3, **caractérisé en ce que** lors du réchauffement du réducteur catalytique sélectif (8) une valeur maximale de gradient de réchauffement du réducteur catalytique sélectif (8) n'est pas atteinte.

5. Procédé selon l'une quelconque des revendications 1 à 4, **caractérisé en ce que** lors d'un réchauffement à partir des températures inférieures à zéro degré Celsius dans la plage de température de désorption, selon laquelle une désorption du dioxyde d'azote s'effectue à partir du revêtement zéolitique catalyseur du réducteur catalytique sélecteur (8), une valeur maximale de gradient de réchauffement prédéfinie n'est pas atteinte.

6. Procédé selon la revendication 5, **caractérisé en ce que** dans une plage de température de désorption comprise entre 10°C et 60°C une valeur maximale de gradient de réchauffement de 20°C par minute n'est pas atteinte.

7. Procédé selon l'une quelconque des revendications 1 à 6, **caractérisé en ce que** l'évaluation de la quantité stockée d'oxyde d'azote repose sur une durée de fonctionnement du moteur à combustion interne (1) à une température demeurant en continu inférieure à en particulier une première température seuil prédéfinie pour le réducteur catalytique sélectif (8).

8. Procédé selon l'une quelconque des revendications 1 à 7, **caractérisé en ce qu'**en tant que valeur limite de quantité stockée d'oxyde d'azote est prédéfinie une valeur inférieure ou égale à 30 % d'une capacité de stockage d'oxyde d'azote (k) du revêtement zéolitique catalyseur du réducteur catalytique sélectif (8).

9. Procédé selon l'une quelconque des revendications précédentes 1 à 8, **caractérisé en ce qu'**une fois une seconde température seuil prédéfinie atteinte pour le réducteur catalytique sélectif (8) le processus de fonctionnement de démarrage à froid est désactivé.

10. Procédé selon l'une quelconque des revendications 1 à 9, **caractérisé en ce que** lors de l'exécution du procédé de fonctionnement du moteur à combustion de démarrage à froid est réalisée une multi-injection de carburant dans une ou plusieurs chambres de combustion de cylindre du moteur à combustion interne (1), qui comprend dans un cycle de travail de chaque cylindre respectif une première injection pilote (PE1), une seconde injection pilote (PE2) suivant la première injection pilote et une injection principale (HE) suivant la seconde injection pilote (PE2),
- la première injection pilote (PE1) s'effectuant dans une plage angulaire de vilebrequin supérieure à 20 degrés avant un point mort supérieur dans le temps de compression de chaque cylindre respectif,
- la seconde injection pilote (PE2) s'effectuant à un moment après le début d'un volume libérant la chaleur du carburant injecté par la première injection pilote (PE1), et
- l'injection principale (HE) s'effectuant à un moment après le début d'un volume libérant la chaleur du carburant injecté par la seconde injection pilote (PE2).

11. Procédé selon la revendication 10, **caractérisé en ce que** la quantité d'injection de la seconde injection pilote (PE2) est inférieure à la quantité d'injection de la première injection pilote (PE1).

12. Procédé selon la revendication 10 ou la revendication 11, **caractérisé en ce que** la seconde injection pilote (PE2) s'effectue dans une plage angulaire de vilebrequin comprise entre 5 degrés et avant 5 degrés après le point mort inférieur du moment de compression.

13. Procédé selon l'une quelconque des revendications 10 à 12, **caractérisé en ce que** l'injection principale (HE) s'effectue dans une plage angulaire de vilebrequin comprise entre 5 et 20 degrés après le point mort supérieur du moment de compression.

14. Procédé selon l'une quelconque des revendications 1 à 13, **caractérisé en ce que** l'exécution du procédé de fonctionnement du moteur à combustion interne s'effectue dans une plage d'allure réduite prédéfinie du moteur à combustion interne (1) et **en ce que** le procédé de fonctionnement du moteur à démarrage à froid est désactivé lorsqu'une charge de moteur à combustion interne est supérieure à la plage d'allure réduite.

15. Procédé selon l'une quelconque des revendications 1 à 14, **caractérisé en ce que** l'évaluation de la quantité stockée d'oxyde d'azote s'effectue dans un réducteur catalytique sélectif (8) qui est disposé en aval d'un filtre à particules dans l'installation de purification de gaz d'échappement.
